# EUROPÄISCHE PATENTSCHRIFT

(11) **EP 3 036 266 B1**
(45) Veröffentlichungstag und Bekanntmachung des Hinweises auf die Patenterteilung: **28.06.2017**
(21) Anmeldenummer: 14747395.3
(22) Anmeldetag: 05.08.2014
(51) Int. Cl.: C08G 18/28, C08G 65/336, C09J 171/02, C09J 175/04, C09J 201/10

(54) **VERNETZBARE MASSEN AUF BASIS VON ORGANYLOXYSILANTERMINIERTEN POLYMEREN**
CROSS-LINKABLE MASSES BASED ON ORGANYL-OXYSILANE-TERMINATED POLYMERS
MATIÈRES RÉTICULABLES À BASE DE POLYMÈRES À TERMINAISONS ORGANYLOXYSILANE

(30) Priorität: 23.08.2013 DE 102013216852
(43) Veröffentlichungstag der Anmeldung: 29.06.2016
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Budczinski, Angelika
(86) Internationale Anmeldenummer: PCT/EP2014/066824
(87) Internationale Veröffentlichungsnummer: WO 2015/024773

(56) Entgegenhaltungen:
- DE-A1-102011 006 128

## Beschreibung

Die Erfindung betrifft vernetzbare Massen auf der Basis von silanvernetzenden Prepolymeren, Verfahren zu deren Herstellung und deren Verwendung als Kleb- und Dichtstoffe.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Kleb- und Dichtstoffen.

So zeigen Kleb- und Dichtstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie sowohl reißfest als auch hochelastisch sein können. Gegenüber herkömmlichen Silicondichtstoffen weisen silanvernetzende Systeme zudem die Vorteile einer Überstreichbarkeit sowie geringerer Verschmutzungsneigungen auf.

Dabei werden in vielen Anwendungen einkomponentige Systeme (1K-Systeme) bevorzugt, die bei Kontakt mit Luftfeuchtigkeit aushärten. Der entscheidende Vorteil von einkomponentigen Systemen ist vor allem deren sehr leichte Applizierbarkeit, da hier keine Mischung verschiedener Klebstoffkomponenten durch den Anwender erforderlich ist.

Nachteilig an diesen Systemen entsprechend des Standes der Technik ist insbesondere die geringe Reaktivität der entsprechenden MS- bzw. SPUR-Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren.

Hier ist der Einsatz von sogenannten α-silanterminierten Prepolymeren von Vorteil, die über reaktive Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen. Kommerziell verfügbare α-silanterminierte Prepolymere sind GENIOSIL^{®} STP-E10 oder -E30 der Wacker-Chemie AG.

Die üblichen silanterminierten Polymere verfügen an der überwiegenden Anzahl ihrer Kettenenden über eine vernetzbare Silanfunktion und enthalten somit - sofern sie auf Polymeren mit linearem Rückgraten basieren - zwei Silanfunktionen pro Molekül. Insbesondere für niedermodulige Systeme, d.h. Dichtstoffe mit einem 100%-Modul < 0,5 MPa, ist es jedoch vorteilhaft, Polymersysteme einzusetzen, die im ausgehärteten Zustand zu besonders niedrigen Vernetzungsdichten führen. Dies lässt sich auf besonders einfache Weise erreichen, wenn nicht ausschließlich die o.g. gängigen, meist difunktionellen Prepolymere eingesetzt werden, sondern stattdessen Mischungen dieser Polymere mit Polymeren, die nur über eine vernetzbare Silanfunktion pro Molekül verfügen. Derartige Systeme sind beispielsweise in EP-A 1 710 270, EP-A 1 710 280 oder auch EP-A 2 076 568 beschrieben. DE 10 2011 006128 A1 offenbart silanvernetzende Klebstoffe auf Basis von Polyoxyalkylenen mit zwei OC(O)NH-Alkylen-SilanEndgruppen, Silanen und eventuellen anderen Komponenten. Das silanfunktionelle Polyoxyalkylen kann als ein Gemisch aus zwei verschiedenen Polyoxyalkylenen vorhanden sein. Nachteilig an den meisten gängigen silanterminierten Prepolymerformulierungen, die im ausgehärteten Zustand eine vergleichsweise geringe Vernetzungsdichte aufweisen, ist jedoch die Tatsache, dass sie oftmals nur über eine nur mäßig gute Rückstellung verfügen. D. h. diese Materialien zeigen nach längerer Dehnung nur noch eine sehr unvollständige Relaxation. Genau diese Eigenschaft müssen Dichtstoffe jedoch in der Regel aufweisen. So wird beispielsweise in der ISO 11600 eine Rückstellung über 60 % oder sogar 70 % für elastische Dichtstoffe gefordert.

Das Problem einer unzureichenden Rückstellung gilt insbesondere für Systeme auf Basis der oben genannten und hinsichtlich ihrer überlegenen Härtungseigenschaften besonders vorteilhaften α-silanterminierten Prepolymere. Der Zusammenhang zwischen niedriger Vernetzungsdichte und geringer Rückstellung liegt dabei auf der Hand, da eine engmaschige Vernetzung es den vernetzten Polymerketten auch im angespannten Zustand unmöglich macht, sich gegeneinander zu verschieben. Eine nachhaltige Verformung, d.h. eine schlechte Rückstellung, wird somit durch eine höhere Vernetzungsdichte verhindert. Jedoch führen höhere Vernetzungsdichten zwangsläufig auch zu höhermoduligen Materialen.

Aufgabe der Erfindung war somit die Entwicklung von silanterminierten Prepolymeren, mit denen niedermodulige Massen zugänglich sind, die die Nachteile des Standes der Technik nicht mehr aufweisen.

Gegenstand der Erfindung sind Massen (M) enthaltend
(A) 100 Gewichtsteile silanvernetzende Polymere der Formel

   (HO)ₓ-Y-[O-CO-NH-(CR¹₂)_{b}-SiRₐ(OR²)₃₋ₐ]₂₋ₓ (I),

   wobei
   - Y: einen 2-wertigen Polymerrest bedeutet,
   - R: gleich oder verschieden sein kann und einen einwertigen, gegebenenfalls substituierten Kohlenwasserstoffrest darstellt,
   - R¹: gleich oder verschieden sein kann und Wasserstoffatom oder einen einwertigen, gegebenenfalls substituierten Kohlenwasserstoffrest darstellt,
   - R²: gleich oder verschieden sein kann und Wasserstoffatom oder einen einwertigen, gegebenenfalls substituierten Kohlenwasserstoffrest darstellt,
   - x: 0 oder 1 ist,
   - a: gleich oder verschieden sein kann und 0, 1 oder 2, bevorzugt 0, ist und
   - b: gleich oder verschieden sein kann und eine ganze Zahl von 1 bis 10, bevorzugt 1, 3 oder 4, besonders bevorzugt 1 oder 3, insbesondere 3, ist,
   mit der Maßgabe, dass die Komponente (A) weniger als 15 Mol%, bevorzugt weniger als 10 Mol%, besonders bevorzugt weniger als 5 Mol%, Polymere der Formel (I) mit x=1 aufweist,
   und
(B) 5 bis 500 Gewichtsteile silanvernetzende Polymere der Formel

   R⁶-O-Z-[O-CO-NH-(CR⁴₂)_{d}-SiR³_{c}(OR⁵)_{3-c}]_{1-y}[OH]_{y} (II),

   wobei
   - Z: einen 2-wertigen Polymerrest, der über keine Hydroxylgruppe verfügt, bedeutet,
   - R³: gleich oder verschieden sein kann und einen einwertigen, gegebenenfalls substituierten Kohlenwasserstoffrest darstellt,
   - R⁴: gleich oder verschieden sein kann und Wasserstoffatom oder einen einwertigen, gegebenenfalls substituierten Kohlenwasserstoffrest darstellt,
   - R⁵: gleich oder verschieden sein kann und Wasserstoffatom oder einen einwertigen, gegebenenfalls substituierten Kohlenwasserstoffrest darstellt,
   - R⁶: einen einwertigen, gegebenenfalls substituierten Kohlenwasserstoffrest darstellt,
   - y: gleich 0 oder 1 ist,
   - c: gleich oder verschieden sein kann und 0, 1 oder 2, bevorzugt 1, ist und
   - d: gleich oder verschieden sein kann und eine ganze Zahl von 1 bis 10, bevorzugt 1, 3 oder 4, besonders bevorzugt 1 oder 3, insbesondere 1, ist,
   mit der Maßgabe, dass Komponente (B) weniger als 15 Mol%, bevorzugt weniger als 10 Mol%, besonders bevorzugt weniger als 5 Mol%, Polymere der Formel (II) mit y=1 aufweist.

Bevorzugt weisen die Massen (M) bezogen auf 100 Gewichtsteile Polymere (A) 10 bis 100 Gewichtsteile Polymer (B) auf. Besonders bevorzugt weisen die Massen (M) bezogen auf 100 Gewichtsteile Polymere (A) 25 bis 75 Gewichtsteile Polymer (B) auf.

Beispiele für Reste R und R³ sind unabhängig voneinander Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, isoPentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R und R³ sind unabhängig voneinander Halogenalkylreste, wie der 3,3,3-Trifluor-n-propylrest, der 2,2,2,2',2',2'-Hexafluor- isopropylrest und der Heptafluorisopropylrest, und Halogenarylreste, wie der o-, m- und p-Chlorphenylrest.

Bevorzugt handelt es sich bei den Resten R und R³ unabhängig voneinander um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ und R⁴ sind unabhängig voneinander Wasserstoffatom, oder die für R angegebenen Reste.

Bevorzugt handelt es sich bei den Resten R¹ und R⁴ unabhängig voneinander um Wasserstoffatom und Kohlenwasserstoffreste mit 1 bis 20 Kohlenstoffatomen, insbesondere um Wasserstoffatom.

Beispiele für Reste R² und R⁵ sind unabhängig voneinander Wasserstoffatom oder die für Rest R angegebenen Beispiele.

Bevorzugt handelt es sich bei den Resten R² und R⁵ unabhängig voneinander um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Beispiele für Reste R⁶ sind die für Rest R angegebenen Beispiele.

Bevorzugt handelt es sich bei dem Rest R⁶ um gegebenenfalls mit Halogenatomen substituierte Alkylreste mit 1 bis 10 Kohlenstoffatomen, besonders bevorzugt um Alkylreste mit 1 bis 6 Kohlenstoffatomen, insbesondere um den Methyl-, Ethylrest, n-Propyl- oder n-Butylrest.

Beispiele für Polymerreste Y und Z sind unabhängig voneinander Polyester-, Polyether-, Polyurethan-, Polyalkylen- und Polyacrylatreste.

Bei den Polymerresten Y und Z handelt es sich unabhängig voneinander bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymetacrylate; Vinylpolymer und/oder Polycarbonate enthalten.

Besonders bevorzugt handelt es sich bei den Resten Y und Z um Polyoxyalkylenreste, besonders bevorzugt um lineare Polyoxyalkylenreste.

Die erfindungsgemäß eingesetzten Polymere der Formel (I) werden bevorzugt dadurch hergestellt, indem Polymere der Formel

HO-Y-OH (V),

mit Silanen der Formel

OCN-(CR¹₂)_{b}*-*SiRₐ(OR²)₃₋ₐ (VI)

umgesetzt werden, wobei alle Reste und Indizes eine der oben genannten Bedeutungen haben. Entscheidend ist dabei, dass durch diese Reaktion eine weitgehend vollständige Terminierung der vorhandenen Kettenenden gelingt.

Die erfindungsgemäß eingesetzten Polymere der Formel (II) werden bevorzugt dadurch hergestellt, indem Polymere der Formel

R⁶-O-Z-OH (IV)

mit Silanen der Formel

OCN-(CR⁴₂)_{b}-Si³Rₐ(OR⁵)₃₋ₐ (VII)

umgesetzt werden, wobei alle Reste und Indizes eine der oben genannten Bedeutungen haben. Entscheidend ist dabei, dass durch diese Reaktion eine weitgehend vollständige Terminierung der vorhandenen hydroxylfunktionellen Kettenenden gelingt.

Der Erfindung liegt daher vor allem die überraschende Tatsache zugrunde, dass Polymersysteme, bei denen nahezu sämtliche OH-Funktionen weitgehend vollständig mit isocyanatfunktionellen Silanen der Formeln (VI) bzw. (VII) terminiert worden sind, sehr gute mechanische Eigenschaften, insbesondere auch eine gute Rückstellungen in Kombination mit einem niedrigen Modul, aufweisen.

Geeignete Verfahren zur Herstellung einer entsprechenden Komponente (A) sowie auch Beispiele für die Komponente (A) selbst sind unter anderem in EP 1 535 940 B1 (Absätze [0005]-[0025] sowie Beispiele 1-3 und Vergleichsbeispiel 1-4) oder EP 1 896 523 B1 (Absätze [0008]-[0047]) beschrieben.

Komponente (B) kann dabei nach äquivalenten Verfahren hergestellt werden, die sich von den in EP 1 535 940 B1 oder EP 1 896 523 B1 beschriebenen Verfahren lediglich darin unterscheiden, dass als Edukte monofunktionelle Polyether der Formel (IV) eingesetzt werden und die jeweiligen Stöchiometrien der Edukte entsprechend angepasst werden.

Vorzugsweise erfolgt die Herstellung der Komponente (B) in Gegenwart eines Katalysators (KB). Beispiele für gegebenenfalls eingesetzte Katalysatoren (KB) sind bismuthaltige Katalysatoren, wie z.B. Katalysatoren mit dem Handelsnamen Borchi^{®} Kat 22, Borchi^{®} Kat VP 0243 oder Borchi^{®} Kat VP 0244 der Borchers GmbH, sowie auch diejenigen Verbindungen, die unten als Härtungskatalysatoren (F) beschrieben sind.

Falls zur Herstellung der Komponente (B) Katalysatoren (KB) eingesetzt werden, werden Mengen von 0,001 bis 5 Gewichtsteilen, insbesondere Mengen von 0,05 bis 1 Gewichtsteilen, jeweils bezogen auf 100 Gewichtsteile der Komponente (B) bevorzugt.

Bei der Herstellung der Komponente (B) werden die Edukte der Formeln (IV) und (VII) vorzugsweise in einem Mengenverhältnis eingesetzt, dass auf 1 Mol Hydroxylfunktion 0,9 bis 2,0 Mol, bevorzugt 0,95 bis 1,6 Mol, besonders bevorzugt 1,0 Mol bis 1,4 Mol, Isocyanatgruppen eingesetzt werden.

Die erfindungsgemäß eingesetzten Verbindungen (A) und (B) können dabei sowohl separat hergestellt und erst bei der Bereitung der erfindungsgemäßen Massen (M) miteinander vermischt werden.

Sie können aber auch gemeinsam hergestellt werden, indem man eine Mischung aus Polyolen der Formeln (IV) und (V) gemeinsam mit isocyanatfunktionellen Silanen der Formeln (VI) bzw. (VII) zur Reaktion bringt.

Die mittleren Molekulargewichte Mₙ der Verbindungen (A) betragen vorzugsweise mindestens 10 000 g/mol, besonders bevorzugt mindestens 11 000 g/mol, und vorzugsweise höchstens 30 000 g/mol, besonders bevorzugt höchstens 24 000 g/mol, insbesondere höchstens 22 000 g/mol.

Die mittleren Molekulargewichte Mₙ der Verbindungen (B) betragen vorzugsweise mindestens 3 000 g/mol, besonders bevorzugt mindestens 4 000 g/mol, und vorzugsweise höchstens 30 000 g/mol, besonders bevorzugt höchstens 18 000 g/mol, insbesondere höchstens 12 000 g/mol.

Die zahlenmittlere Molmasse Mₙ wurde bestimmt mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl.

Die Viskosität der Komponente (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die Viskosität der Komponente (B) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Im Rahmen der vorliegenden Erfindung wird die Viskosität mit einem Rotationsviskosimeter nach Brookfield ermittelt.

Die erfindungsgemäß eingesetzten Komponenten (A) und (B) können nur eine Art von Verbindung der Formel (I) bzw. (II) enthalten wie auch Gemische unterschiedlicher Arten von Verbindungen der Formel (I) bzw. (II).

Falls es sich bei Komponente (A) um verschiedene Arten von Verbindungen der Formel (I) handelt, sind Mischungen, die sowohl Verbindungen mit Silanendgruppen enthalten, bei denen b=1, R¹=H und a=1 bedeuten, als auch Verbindungen mit Silanendgruppen, bei denen b=3, R¹=H und a=0 bedeuten, bevorzugt.

Falls es sich bei Komponente (B) um verschiedene Arten von Verbindungen der Formel (II) handelt, sind Mischungen, die sowohl Verbindungen mit Silanendgruppen enthalten, bei denen d=1, R⁴=H und c=1 bedeuten, als auch Verbindungen mit Silanendgruppen, bei denen d=3, R⁴=H und c=0 bedeuten, bevorzugt.

In einer besonderen Ausführung sind in den erfindungsgemäßen Massen (M) Polymere (A) enthalten, bei denen in mindestens 70% aller Silanendgruppen, bevorzugt in mindestens 90% aller Silanendgruppen, b=3, R¹=H und a=0 ist, und Polymere (B), bei denen in mindestens 70% aller Silanendgruppen, besonders bevorzugt in mindestens 90% aller Silanendgruppen, d=1, R⁴=H und c=1 ist.

In einer weiteren besonderen Ausführung sind in den erfindungsgemäßen Massen (M) Polymere (A) enthalten, bei denen in mindestens 70% aller Silanendgruppen, bevorzugt in mindestens 90% aller Silanendgruppen, b=3, R¹=H und a=0 ist, und Polymere (B), bei denen in mindestens 70% aller Silanendgruppen, besonders bevorzugt in mindestens 90% aller Silanendgruppen, d=3, R⁴=H und c=0 ist.

Die erfindungsgemäß eingesetzten Verbindungen (A) sind handelsübliche Produkte oder können nach in der Chemie gängigen Verfahren hergestellt werden. Beispiele für kommerziell erhältliche Verbindungen (A) stellen die Produkte GENIOSIL^{®} der Typen STP-E 10, STP-E 15, STP-E 30 oder STP-E 35 der Wacker Chemie AG dar.

Die erfindungsgemäß eingesetzten Verbindungen (B) können nach in der Chemie gängigen Verfahren, wie z.B. den oben genannten, hergestellt werden.

Die erfindungsgemäßen Massen (M) können zusätzlich zu den Komponenten (A) und (B) noch weitere Stoffe enthalten, die unterschiedlich sind zu den Komponenten (A) und (B), wie z.B. (C) nicht direkt an Carbonylgruppen gebundene Stickstoffatome aufweisende Organosiliciumverbindungen, (D) Füllstoffe, (E) Siliconharze, (F) Katalysatoren, (G) Haftvermittler, (H) Wasserfänger, (I) nicht reaktive Weichmacher, (J) Additive und (K) Zuschlagstoffe.

Bei den in den erfindungsgemäßen Massen (M) gegebenenfalls enthaltenen, nicht direkt an Carbonylgruppen gebundene Stickstoffatome aufweisenden Organosiliciumverbindungen (C) handelt es sich bevorzugt um Organosiliciumverbindungen enthaltend Einheiten der Formel

DₑSi(OR⁷)_{f}R⁸_{g}O_{(4-e-f-g)/2} (III),

worin
R⁷ gleich oder verschieden sein kann und Wasserstoffatom oder gegebenenfalls substituierte Kohlenwasserstoffreste bedeutet,
D gleich oder verschieden sein kann und einwertige, SiCgebundene, nicht direkt an Carbonylgruppen gebundene Stickstoffatome aufweisende Reste bedeutet,
R⁸ gleich oder verschieden sein kann und einen einwertigen, gegebenenfalls substituierten SiC-gebundenen, von Stickstoff freien organischen Rest bedeutet,
e 0, 1, 2, 3 oder 4, bevorzugt 1, ist,
f 0, 1, 2 oder 3, bevorzugt 1, 2 oder 3, besonders bevorzugt 2 oder 3, ist und
g 0, 1, 2 oder 3, bevorzugt 1 oder 0, ist,
mit der Maßgabe, dass die Summe aus e+f+g kleiner oder gleich 4 ist und pro Molekül mindestens ein Rest D anwesend ist.

Bei den erfindungsgemäß eingesetzten Organosiliciumverbindungen (C) kann es sich sowohl um Silane handeln, d.h. Verbindungen der Formel (VIII) mit e+f+g=4, als auch um Siloxane, d.h. Verbindungen enthaltend Einheiten der Formel (VII) mit e+f+g≤3, wobei es sich bevorzugt um Silane handelt.

Beispiele für gegebenenfalls substituierte Kohlenwasserstoffreste R⁷ sind die für Rest R angegebenen Beispiele.

Bei den Resten R⁷ handelt es sich vorzugsweise um Wasserstoffatom oder gegebenenfalls mit Halogenatomen substituierte Kohlenwasserstoffreste mit 1 bis 18 Kohlenstoffatomen, besonders bevorzugt um Wasserstoffatom oder Kohlenwasserstoffreste mit 1 bis 10 Kohlenstoffatomen, insbesondere um Methyl- oder Ethylrest.

Beispiele für Rest R⁸ sind die für R angegebenen Beispiele.

Bei Rest R⁸ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂N(CH₂)₃-, (C₄H₉)₂N(CH₂)₃-, (C₅H₁₁)₂N(CH₂)₃-, (C₆H₁₃)₂N(CH₂)₃-, (C₇H₁₅)2_{N}(CH2)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂N(CH₂)-, (C₄H₉)₂N(CH₂)-, (C₅H₁₁)₂N(CH₂)-, (C₆H₁₃)₂N(CH₂)-, (C₇H₁₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- und cyclo-C₆H₁₁NH(CH₂)₃-Rest.

Beispiele für die erfindungsgemäß gegebenenfalls eingesetzten Silane der Formel (III) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH_{3,} HN((CH₂)₃-Si(OCH₃)₃)₂, HN((CH₂)₃-Si(OC₂H₅)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, wie auch deren Teilhydrolysate, wobei H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß gegebenenfalls eingesetzten Organosiliciumverbindungen (C) können in den erfindungsgemäßen Massen (M) auch die Funktion eines Härtungskatalysators oder -cokatalysators übernehmen.

Des Weiteren können die erfindungsgemäß gegebenenfalls eingesetzten Organosiliciumverbindungen (C) als Haftvermittler und/oder als Wasserfänger wirken.

Die erfindungsgemäß gegebenenfalls eingesetzten Organosiliciumverbindungen (C) sind handelsübliche Produkte bzw. nach in der Chemie gängigen Verfahren herstellbar.

Falls die erfindungsgemäßen Massen (M) Komponente (C) enthalten, handelt es sich um Mengen von bevorzugt 0,01 bis 25 Gewichtsteilen, besonders bevorzugt 0,1 bis 10 Gewichtsteilen, insbesondere 0,5 bis 5 Gewichtsteilen, jeweils bezogen auf 100 Gewichtsteile Komponente (A). Die erfindungsgemäßen Massen (M) enthalten bevorzugt Komponente (C).

Bei den in den erfindungsgemäßen Massen (M) gegebenenfalls eingesetzten Füllstoffen (D) kann es sich um beliebige, bisher bekannte Füllstoffe handeln.

Beispiele für Füllstoffe (D) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, gefällter und/oder gemahlener Kreide, die sowohl beschichtet als auch unbeschichtet sein kann, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (D) um gemahlene und/oder gefällte Kreide, die sowohl beschichtet als auch unbeschichtet sein kann, Talkum, Aluminiumtrihydroxid sowie Kieselsäure, wobei Calciumcarbonat und Aluminiumtrihydroxid besonders bevorzugt werden. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (D) haben einen Feuchtigkeitsgehalt von bevorzugt unter 1 Gew.-%, besonders bevorzugt von unter 0,5 Gew.-%.

Falls die erfindungsgemäßen Massen (M) Füllstoffe (D) enthalten, handelt es sich um Mengen von vorzugsweise 10 bis 1000 Gewichtsteilen, besonders bevorzugt 50 bis 500 Gewichtsteilen, insbesondere 70 bis 200 Gewichtsteilen, jeweils bezogen auf 100 Gewichtsteile Bestandteil (A). Die erfindungsgemäßen Massen (M) enthalten bevorzugt Füllstoffe (D).

In einer besonderen Ausführung der Erfindung enthalten die erfindungsgemäßen Massen (M) als Füllstoffe (D) Calciumcarbonat, Aluminiumtrihydroxid und/oder Talkum oder aber eine Kombination aus
a) Kieselsäure, insbesondere pyrogene Kieselsäure, und
b) Calciumcarbonat, Aluminiumtrihydroxid und/oder Talkum.

In einer weiteren besonderen Ausführung der Erfindung enthalten die erfindungsgemäßen Massen (M) als Füllstoffe (D) eine Kombination aus
a) gefällter Kreide
b) gemahlener Kreide.

Bei den in den erfindungsgemäßen Massen (M) gegebenenfalls eingesetzten Siliconharzen (E) handelt es sich vorzugsweise um Phenylsiliconharze.

Beispiele für als Komponenten (E) einsetzbare Phenylsiliconharze sind handelsübliche Produkte, z.B. verschiedene SILRES^{®}-Typen der Wacker Chemie AG, wie SILRES^{®} IC 368, SILRES^{®} IC 678 oder SILRES^{®} IC 231 oder SILRES^{®} SY231.

Falls die erfindungsgemäßen Massen (M) Harze (E) enthalten, handelt es sich um Mengen von mindestens 5 Gewichtsteilen, besonders bevorzugt mindestens 10 Gewichtsteilen, insbesondere mindestens 50 Gewichtsteilen und vorzugsweise höchstens 1000 Gewichtsteilen, besonders bevorzugt höchstens 500 Gewichtsteilen, insbesondere höchstens 300 Gewichtsteilen, jeweils bezogen auf 100 Gewichtsteile der Komponente (A).

Bei den in den erfindungsgemäßen Massen (M) gegebenenfalls eingesetzten Katalysatoren (F) kann es sich um beliebige, bisher bekannte Katalysatoren für durch Silankondensation härtende Massen handeln.

Beispiele für metallhaltige Härtungskatalysatoren (F) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (F) sind basische Verbindungen, wie Triethylamin, Tributylamin, 1,4-Diazabicyclo[2.2.2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, Pentamethylguanidin, Tetramethylguanidin sowie weitere Guanidinderivate, N,N-Dimethylcyclohexylamin, N,N-Dimethylphenylamin und N-Ethylmorpholinin.

Ebenfalls als Katalysator (F) können saure Verbindungen eingesetzt werden, wie beispielsweise Phosphorsäure und ihre Ester, Toluolsulfonsäure, Schwefelsäure, Salpetersäure oder auch organische Carbonsäuren, z.B. Essigsäure und Benzoesäure.

In einer Ausführung der Erfindung handelt es sich bei den gegebenenfalls eingesetzten Katalysatoren (F) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90 Gew.-%, vorzugsweise zu mindestens 95 Gew.-%, aus Verbindungen der Formel (I) besteht, in denen b ungleich 1 ist.

Falls die erfindungsgemäßen Massen (M) Katalysatoren (F) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

Bei den in den erfindungsgemäßen Massen (M) gegebenenfalls eingesetzten Haftvermittlern (G) kann es sich um beliebige, bisher für durch Silankondensation härtenden Systemen beschriebene Haftvermittler handeln.

Beispiele für Haftvermittler (G) sind Epoxysilane, wie Glycidoxypropyltrimethoxysilane, Glycidoxypropyl-methyldimethoxysilan, Glycidoxypropyltriethoxysilan oder Glycidoxypropyl-metyhldiethoxysilan, 2-(3-Triethoxysilylproypl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Massen (M) Haftvermittler (G) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile der Komponente (A). Die erfindungsgemäßen Massen (M) enthalten bevorzugt Komponenten (C) und/oder (G) als Haftvermittler.

Bei den in den erfindungsgemäßen Massen (M) gegebenenfalls eingesetzten Wasserfängern (H) kann es sich um beliebige, für durch Silankondensation härtenden Systemen beschriebene Wasserfänger handeln.

Beispiele für Wasserfänger (H) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan sowie O-Ethylcarbamatomethyl-triethoxysilan und/oder deren Teilkondensate sowie Orthoester, wie 1,1,1-Trimethoxyethan, 1,1,1-Triethoxyethan, Trimethoxymethan und Triethoxymethan.

Falls die erfindungsgemäßen Massen (M) Wasserfänger (H) enthalten, handelt es sich um Mengen von vorzugsweise 0,5 bis 30 Gewichtsteilen, besonders bevorzugt 1 bis 20 Gewichtsteilen, jeweils bezogen auf 100 Gewichtsteile der Komponente (A). Die erfindungsgemäßen Massen enthalten bevorzugt Wasserfänger (H).

Bei den in den erfindungsgemäßen Massen (M) gegebenenfalls eingesetzten nicht reaktiven Weichmachern (I) kann es sich um beliebige, bisher bekannte, für silanvernetzende Systeme typische Weichmacher handeln.

Beispiele für nicht reaktive Weichmacher (I) sind Phthalsäureester (z.B. Dioctylphthalat, Diisooctylphthalat und Diundecylphthalat), perhydrierte Phthalsäureester (z.B. 1,2-Cyclohexandicarbonsäurediisononylester und 1,2-Cyclohexandicarbonsäuredioctylester) Adipinsäureester (z.B. Dioctyladipat), Benzoesäureester, Glycolester, Ester gesättigter Alkandiole (z.B. 2,2,4-Trimethyl-1,3-pentandiolmonoisobutyrate und 2,2,4-Trimethyl-1,3-pentandioldiisobutyrate), Phosphorsäureester, Sulfonsäureester, Polyester, Polyether (z.B. Polyethylenglycole und Polypropylenglycole mit Molmassen Mₙ von vorzugsweise 400 bis 10 000 g/mol), Polystyrole, Polybutadiene, Polyisobutylene, paraffinische Kohlenwasserstoffe und hochmolekulare, verzweigte Kohlenwasserstoffe.

Falls die erfindungsgemäßen Massen (M) nicht reaktive Weichmacher (I) enthalten, handelt es sich um Mengen von vorzugsweise 0,01 bis 100 Gewichtsteilen bezogen auf 100 Gewichtsteile Komponente (A).

In einer besonders vorteilhaften Ausführung der Erfindung enthalten die erfindungsgemäßen Massen (M) nicht reaktiven Weichmacher (I).

Bei den in den erfindungsgemäßen Massen (M) gegebenenfalls eingesetzten Additiven (J) kann es sich um beliebige, bisher bekannte, für silanvernetzende Systeme typische Additive handeln.

Bei den erfindungsgemäß gegebenenfalls eingesetzten Additiven (J) handelt es sich bevorzugt um Antioxidantien, UV-Stabilisatoren, wie z.B. sog. HALS-Verbindungen, Fungizide und Pigmente.

Falls die erfindungsgemäßen Massen (M) Additive (J) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Komponente (A). Die erfindungsgemäßen Massen (M) enthalten bevorzugt Additive (J).

Bei den erfindungsgemäß gegebenenfalls eingesetzten Zuschlagsstoffen (K) handelt es sich bevorzugt um Tetraalkoxysilane, z.B. Tetraethoxysilan und/oder deren Teilkondensate, Weichmacher, Reaktivweichmacher, Rheologieadditive, Flammschutzmittel und organische Lösungsmittel.

Bevorzugte Reaktivweichmacher (K) sind Verbindungen, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilane, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bei den Rheologieadditiven (K) handelt es sich bevorzugt um Polyamidwachse, hydrierte Rizinusöle oder Stearate.

Beispiele für organische Lösungsmittel (K) sind niedermolekulare Ether, Ester, Ketone, aromatische und aliphatische sowie gegebenenfalls halogenhaltige Kohlenwasserstoffe und Alkohole, wobei letztere bevorzugt werden.

Den erfindungsgemäßen Massen (M) werden vorzugsweise keine organischen Lösungsmitteln (K) zugesetzt.

Falls die erfindungsgemäßen Massen (M) eine oder mehrere Komponenten (K) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Die erfindungsgemäßen Massen (M) enthalten Komponenten (A) und (B) in Konzentrationen von insgesamt vorzugsweise höchstens 99 Gew.-%, bevorzugt höchstens 95 Gew.-%, besonders bevorzugt insgesamt höchstens 65 Gew.-%, und vorzugsweise insgesamt mindestens 10 Gew.-%, besonders bevorzugt insgesamt mindestens 15 Gew.-%, jeweils bezogen auf das Gesamtgewicht der Masse (M).

Bevorzugt handelt es sich bei den erfindungsgemäßen Massen (M) um solche enthaltend
(A) 100 Gewichtsteile Polymere (A),
(B) 5 bis 500 Gewichtsteile Polymere (B),
(C) 0,01 bis 25 Gewichtsteile nicht direkt an Carbonylgruppen gebundene Stickstoffatome aufweisende Organosiliciumverbindungen,
   gegebenenfalls (D) Füllstoffe,
   gegebenenfalls (E) Siliconharze,
   gegebenenfalls (F) Katalysatoren,
   gegebenenfalls (G) Haftvermittler,
   gegebenenfalls (H) Wasserfänger,
   gegebenenfalls (I) nicht reaktive Weichmacher,
   gegebenenfalls (J) Additive und
   gegebenenfalls (K) Zuschlagstoffe.

Bei den erfindungsgemäßen Massen (M) handelt es sich besonders bevorzugt um solche enthaltend
(A) 100 Gewichtsteile Polymere (A),
(B) 5 bis 500 Gewichtsteile Polymere (B),
(C) 0,1 bis 10 Gewichtsteile nicht direkt an Carbonylgruppen gebundene Stickstoffatome aufweisende Organosiliciumverbindungen,
(D) 10 bis 1000 Gewichtsteile Füllstoffe,
   gegebenenfalls (E) Siliconharze,
   gegebenenfalls (F) Katalysatoren,
   gegebenenfalls (G) Haftvermittler,
   gegebenenfalls (H) Wasserfänger,
   gegebenenfalls (I) nicht reaktive Weichmacher,
   gegebenenfalls (J) Additive und
   gegebenenfalls (K) Zuschlagstoffe.

Insbesondere handelt es sich bei den erfindungsgemäßen Massen (M) um solche enthaltend
(A) 100 Gewichtsteile Polymere (A),
(B) 5 bis 500 Teile Polymere (B),
(C) 0,1 bis 10 Gewichtsteile nicht direkt an Carbonylgruppen gebundene Stickstoffatome aufweisende Organosiliciumverbindungen,
(D) 50 bis 500 Gewichtsteile Füllstoffe,
   gegebenenfalls (E) Siliconharze,
   gegebenenfalls (F) Katalysatoren,
   gegebenenfalls (G) Haftvermittler,
   gegebenenfalls (H) Wasserfänger,
(I) 0,01 bis 100 Gewichtsteile nicht reaktive Weichmacher,
   gegebenenfalls (J) Additive und
   gegebenenfalls (K) Zuschlagstoffe.

Die erfindungsgemäßen Massen (M) enthalten außer den Komponenten (A) bis (K) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen (M) handelt es sich bevorzugt um Formulierungen mit Viskositäten von bevorzugt 500 bis 1 000 000 mPas, besonders bevorzugt von 1 000 bis 500 000 mPas, insbesondere 5 000 bis 100 000 mPas, jeweils bei 25°C.

Die erfindungsgemäßen Massen (M) sind feuchtigkeitshärtend, d.h. es handelt sich vorzugsweise um flüssige oder pastöse Massen, die bei Kontakt mit Wasser und/oder Luftfeuchtigkeit aushärten.

Die Herstellung der erfindungsgemäßen Massen (M) kann nach beliebiger und an sich bekannter Art und Weise erfolgen, wie etwa nach Methoden und Mischverfahren, wie sie zur Herstellung von feuchtigkeitshärtenden Zusammensetzungen üblich sind.

Ein weiterer Gegenstand der vorliegenden Erfindung ist ein Verfahren zur Herstellung der erfindungsgemäßen Massen (M) durch Mischen der einzelnen Komponenten in beliebiger Reihenfolge.

Dabei wird bevorzugt die katalytisch wirksamen Komponenten (C) und (F) erst am Ende des Mischvorganges zugesetzt.

Dieses Vermischen kann bei Raumtemperatur, d.h. bei Temperaturen zwischen 0 und 30°C und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Massen (M) handelt es sich bevorzugt um einkomponentige, unter Ausschluss von Wasser lagerfähige, bei Zutritt von Wasser bei Raumtemperatur vernetzbare Massen. Die erfindungsgemäßen Massen (M) können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Massen (M) reicht der übliche Wassergehalt der Luft aus. Die Vernetzung der erfindungsgemäßen Massen (M) erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehaltes der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Die erfindungsgemäßen Massen (M) können für alle Zwecke eingesetzt werden, für die auch bisher vernetzbare Massen auf der Basis von Organosiliciumverbindungen eingesetzt worden sind, bevorzugt als Kleb- oder Dichtstoffe, besonders bevorzugt als Dichtstoffe, insbesondere als Dichtmassen für Fugen.

Bei der Verwendung der Massen (M) als Dichtmassen für Fugen können die abzudichtenden Fugen aus den unterschiedlichsten Materialen bestehen, z.B. aus Stein, Beton, mineralischen Untergründen, Metallen, Glas, Keramik, Holz und lackierten Oberflächen oder Substraten, aber auch Kunststoffen inkl. PVC. Dabei können die Flanken der Fuge sowohl aus gleichen als auch aus unterschiedlichen Materialen bestehen.

Ein weiterer Gegenstand der Erfindung sind Formkörper hergestellt durch Vernetzung der erfindungsgemäßen Massen (M).

Die erfindungsgemäßen Formkörper weisen ein 100%-Modul von vorzugsweise 0,1-1,4 MPa, besonders bevorzugt von 0,15-0,5 MPa, auf.

Die erfindungsgemäßen Formkörper weisen Reißdehnungen von vorzugsweise mindestens 200%, besonders bevorzugt von mindestens 400%, insbesondere von mindestens 500%, auf.

Bei den erfindungsgemäßen Formkörpern liegt die Rückstellung vorzugsweise bei mindestens 70%.

Bei den erfindungsgemäßen Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

Ein weiterer Gegenstand der Erfindung ist ein Verfahren zur Verklebung von Substraten, bei dem die erfindungsgemäße Masse (M) auf die Oberfläche mindestens eines Substrates aufgebracht, diese Oberfläche dann mit dem zu verklebenden zweiten Substrat in Kontakt gebracht und anschließend vernetzen gelassen wird.

Beispiele für Substrate, die erfindungsgemäß verklebt werden können, sind Beton, mineralische Untergründe, Metalle, Glas, Keramik und lackierte Oberflächen, Holz aber auch Kunststoffe inkl. PVC. Dabei können sowohl gleiche als auch unterschiedliche Materialen miteinander verklebt werden.

Ein weiterer Gegenstand der Erfindung ist ein Verfahren zur Herstellung von Materialverbunden, bei dem die erfindungsgemäße Masse auf mindestens ein Substrat aufgebracht und anschließend vernetzen gelassen wird. Beispiele hierfür sind Beschichtungen, Verguss, z.B. Vergussmassen für LEDs oder sonstige elektronische Bauteile.

Des Weiteren haben die erfindungsgemäßen Massen (M) den Vorteil, dass damit Dichtstoffe mit hervorragenden Eigenschaften hergestellt werden können.

Die erfindungsgemäßen Massen (M) haben den Vorteil, dass sie leicht herzustellen sind.

Die erfindungsgemäßen Massen (M) haben den Vorteil, dass sie sich durch eine sehr hohe Lagerstabilität und eine hohe Vernetzungsgeschwindigkeit auszeichnen.

Ferner haben die erfindungsgemäßen Massen (M) den Vorteil, dass sie ein ausgezeichnetes Haftungsprofil aufweisen.

Des Weiteren haben die erfindungsgemäßen vernetzbaren Massen (M) den Vorteil, dass sie leicht zu verarbeiten sind.

Des Weiteren haben die erfindungsgemäßen vernetzbaren Massen (M) den Vorteil, dass daraus Formkörper, insbesondere Dichtstoffe, mit niedrigem Modul und guten Rückstellungen erhalten werden können.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

### Polymer A: Polypropylenglycol mit einer reaktiven Silylgruppe

In einem 2000 ml Reaktionsgefäß mit Rühr-, Kühl- und Heizmöglichkeiten werden 1500,0 g (0,3 Mol) eines monohydroxy-monobutoxy-terminierten Polypropylenglycols mit einer mittleren Molmasse Mₙ von 5000 g/Mol (käuflich erhältlich unter der Bezeichnung Preminol^{®} S 1005 bei der AGC Chemicals Europe, LTD, NL-Amsterdam) vorgelegt und für 2 h bei 80°C und 100 Pa (1 mbar) unter Rühren getrocknet. Dann wird auf Raumtemperatur abgekühlt und anschließend werden 58,0 g (0,36 Mol) Isocyanatomethyl-methyldimethoxysilan (käuflich erhältlich unter der Bezeichnung GENIOSIL^{®}XL 42 bei der Wacker Chemie AG, D-München) zugegeben. Die Mischung wird für 10 min bei 80°C gerührt. Danach werden 0,23 g (150 ppm) eines bismuthaltigen Katalysators (käuflich erhältlich unter der Bezeichnung Borchi^{®} Kat 24 bei der Borchers GmbH, D-Langenfeld) zugegeben, wobei sich die Reaktionsmischung auf 84-85°C erwärmt. Die Reaktionsmischung wird für weitere 120 min bei 80°C gerührt.

Anschließend wird auf 60°C abgekühlt, und es werden 1,92 g (0,06 Mol) Methanol zugegeben und für weitere 30 min bei 60°C gerührt. In der resultierenden Polymermischung lassen sich IR-spektroskopisch keine Isocyanatgruppen mehr nachweisen. Man erhält eine klare, durchsichtige Polymermischung, die bei 25°C eine Viskosität von 1,5 Pas aufweist. Sie lässt sich problemlos weiterverarbeiten.

### Beispiel 2

### Polymer B: Polypropylenglycol mit einer reaktiven Silylgruppe

In einem 2000 ml Reaktionsgefäß mit Rühr-, Kühl- und Heizmöglichkeiten werden 1500,0 g (0,15 Mol) eines monohydroxy-monobutoxy-terminierten Polypropylenglycols mit einer mittleren Molmasse Mₙ von 10000 g/Mol (käuflich erhältlich unter der Bezeichnung Preminol^{®} S 1011 bei der AGC Chemicals Europe, LTD, NL-Amsterdam) vorgelegt und für 2 h bei 80°C und 100 Pa (1 mbar) unter Rühren getrocknet. Dann wird auf Raumtemperatur abgekühlt und anschließend werden 36,9 g (0,18 Mol) Isocyanatopropyl-trimethoxysilan (käuflich erhältlich unter der Bezeichnung GENIOSIL^{®} GF 40 bei der Wacker Chemie AG, D-München) zugegeben. Die Mischung wird für 10 min bei 80°C gerührt. Danach werden 0,23 g (150 ppm) eines bismuthaltigen Katalysators (käuflich erhältlich unter der Bezeichnung Borchi^{®} Kat 24 bei der Borchers GmbH, D-Langenfeld) zugegeben, wobei sich die Reaktionsmischung etwa auf 82°C erwärmt. Die Reaktionsmischung wird für weitere 120 min bei 80°C gerührt.

Anschließend werden 1,00 g (0,03 Mol) Methanol zugegeben und für weitere 30 min bei 80 °C gerührt. In der resultierenden Polymermischung lassen sich IR-spektroskopisch keine Isocyanatgruppen mehr nachweisen. Man erhält eine klare, durchsichtige Polymermischung, die bei 25°C eine Viskosität von 9,4 Pas aufweist. Sie lässt sich problemlos weiterverarbeiten.

### Beispiel 3

### Herstellung einer Dichtstoffformulierung

20,0 g Polymer B aus Beispiel 2 werden in einem Laborplanetenmischer der Fa. PC-Laborsystem, ausgestattet mit zwei Balkenmischern, bei ca. 25°C mit 30,0 g eines beidseitig silanterminierten Polypropylenglycols mit einer mittleren Molmasse Mₙ von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG, D-München), 40,0 g Trioctyltrimellitat (käuflich erhältlich unter der Bezeichnung Oxsoft TOTM bei der OXEA GmbH, D-Oberhausen) und 3,0 g Vinyltrimethoxysilan 2 Minuten bei 200 U/min homogenisiert.

Danach werden 105,6 g eines mit Stearinsäure beschichteten Calciumcarbonat mit einem mittleren Teilchendurchmesser (D50%) von ca. 2,0 µm (käuflich erhältlich unter der Bezeichnung Omyabond 520 bei der Firma Omya, D-Köln) zugegeben und eine Minute unter Rühren bei 600 U/min aufgeschlossen. Schließlich werden 1,0 g 3-Aminopropyl-trimethoxysilan und 0,4 g Dibutylzinndilaurat 1 Minute bei 200 U/min eingemischt und 1 Minute bei 200 U/min im Teilvakuum (ca. 10 kPa (1 mbar)) homogenisiert und blasenfrei gerührt. Die so erhaltene Masse wird in 310 ml PE-Kartuschen abgefüllt und 24 Stunden bei 20°C vor der Untersuchung gelagert.

### Beispiel 4

### Herstellung einer Dichtstoffformulierung

Die in Beispiel 3 beschrieben Verfahrensweise wird wiederholt mit der Abänderung, dass 1,0 g N-(Cyclohexyl)-3-aminopropyl-trimethoxysilan anstelle von 1,0 g 3-Aminopropyl-trimethoxysilan eingesetzt werden.

Die so erhaltene Masse wird in 310 ml PE-Kartuschen abgefüllt und 24 Stunden bei 20°C vor der Untersuchung gelagert.

### Beispiel 5 (Vergleich)

### Herstellung einer Dichtstoffformulierung

Die in Beispiel 3 beschrieben Verfahrensweise wird wiederholt mit der Abänderung, dass anstelle von 20,0 g Polymer B und 30 g eines beidseitig silanterminierten Polypropylenglycols mit einer mittleren Molmasse Mₙ von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG, D-München), 50 g der letztgenannten Komponente eingesetzt werden.

Die so erhaltene Masse wird in 310 ml PE-Kartuschen abgefüllt und 24 Stunden bei 20°C vor der Untersuchung gelagert.

### Beispiel 6 (Vergleich) Herstellung einer Dichtstoffformulierung

Die in Beispiel 3 beschrieben Verfahrensweise wird wiederholt mit der Abänderung, dass anstelle von 20,0 g Polymer B und 30 g eines beidseitig silanterminierten Polypropylenglycols mit einer mittleren Molmasse Mₙ von 18000 g/mol und Endgruppen der Formel -O-C(=O)-NH-(CH₂)₃-Si(OCH₃)₃, 50 g eines beidseitig silanterminierten Polypropylenglycols mit einer mittleren Molmasse Mₙ von 18000 g/mol und Endgruppen der Formel O-C(=O)-NH-(CH₂)-Si(CH₃)(OCH₃)₂ (käuflich erhältlich unter der Bezeichnung GENIOSIL^{®} STP-E30) eingesetzt werden.

Die so erhaltene Masse wird in 310 ml PE-Kartuschen abgefüllt und 24 Stunden bei 20°C vor der Untersuchung gelagert.

### Beispiel 7 (Vergleich)

### Herstellung einer Dichtstoffformulierung

Die in Beispiel 3 beschrieben Verfahrensweise wird wiederholt mit der Abänderung, dass anstelle von 20,0 g Polymer B die identische Menge eines beidseitig silanterminierten Polypropylenglycols mit einer mittleren Molmasse Mₙ von 18000 g/mol und Endgruppen der Formel O-C(=O)-NH-(CH₂)-Si(CH₃)(OCH₃)₂ (käuflich erhältlich unter der Bezeichnung GENIOSIL^{®} STP-E30) eingesetzt wird.

Die so erhaltene Masse wird in 310 ml PE-Kartuschen abgefüllt und 24 Stunden bei 20°C vor der Untersuchung gelagert.

### Beispiel 8

### Bestimmung von Eigenschaftsprofilen der hergestellten Dichtstoffe

Die in den Beispielen 3 bis 6 erhaltenen Dichtmassen wurden vernetzen gelassen und hinsichtlich ihrer Hautbildung, ihrer mechanischen Eigenschaften und ihrer Rückstellung untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Mechanische Eigenschaften

Die Massen wurden jeweils auf ausgefräste Teflonplatten mit 2 mm Tiefe ausgestrichen und 2 Wochen bei 23°C und 50% relativer Luftfeuchte gehärtet.

Die Shore-A-Härte wird gemäß DIN 53505 bestimmt.

Die Reißfestigkeit wird gemäß DIN 53504-S1 bestimmt.

Reißdehnung wird gemäß DIN 53504-S1 bestimmt.

Das 100%-Modul wird gemäß DIN 53504-S1 bestimmt.

Das 100%-Modul sollte bei niedermoduligen Dichtstoffen vorzugsweise unter 0,5 MPa liegen.

### Rückstellung:

Messung der Rückstellung erfolgte nach 2 und 4 wöchiger Vorlagerung der S2-Prüfkörper (DIN 53504) bei 23 °C, 50% rel. Luftfeuchte. Die Prüfkörper wurden 24 h um 30% gedehnt. Die Bestimmung der Rückstellung erfolgte nach 1 h Relaxation bei 23 °C, 50% rel. Luftfeuchte .

Die Rückstellung sollte bei niedermoduligen Dichtstoffen vorzugsweise über 70% betragen.

**Tabelle 1:**

| **Formulierung aus Beispiel** | **3** | **4** | **5** | **6** | **7** |
|---|---|---|---|---|---|
| Polymer mit 2 Si(OCH₃)₃-Gruppen [Gew.-%] | 15 | 15 | 25 | - | 15 |
| Polymer mit 2 Si(CH₃)(OCH₃)2-Gruppen [Gew.-%] | - | - | - | 25 | 10 |
| Polymer mit 1 Si(OCH₃)₃-Gruppe [Gew.-%] | 10 | 10 | - | - | - |
| Hautbildungszeit [min] | 35 | 80 | 21 | 34 | 15 |
| Shorehärte A | 23 | 16 | 35 | 30 | 43 |
| Reißdehnung [%] | 688 | 709 | 544 | 450 | 509 |
| Reißfestigkeit [MPa] | 1,2 | 1,3 | 2,2 | 1,2 | 1,8 |
| 100%-Modul [MPa] | 0,39 | 0,27 | 0,80 | 0,61 | 0,89 |
| Rückstellung [%] | 72 | 75 | 78 | 10 | 55 |

### Beispiel 9

### Herstellung einer Dichtstoffformulierung und Bestimmung der mechanischen Eigenschaften.

13 g Polymer A aus Beispiel 1 werden in einem Laborplanetenmischer der Fa. PC-Laborsystem, ausgestattet mit zwei Balkenmischern, bei ca. 25°C mit 46,0 g eines beidseitig silanterminierten Polypropylenglycols mit einer mittleren Molmasse Mₙ von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG, D-München), 60,6 g eines nicht silanisierten, d.h. mit Hydroxylgruppen terminierten Polypopylenglycols mit einer mittleren Molmasse Mₙ von 2000 g/mol und 2,0 g Vinyltrimethoxysilan 2 Minuten bei 200 U/min homogenisiert.

Danach werden 63,0 g einer gemahlenen natürlichen Kreide mit einem mittleren Teilchendurchmesser (D50%) von ca. 5 µm (käuflich erhältlich unter der Bezeichnung Ulmer Weiß XM bei der Eduard Merkle GmbH & Co. KG, D-Blaubeuren) und 12 g einer mit Fettsäure beschichteten gefällten Kreide mit einem mittleren Teilchendurchmesser (D50%) von ca. 0,07 µm (käuflich erhältlich unter der Bezeichnung Hakuenka CCR S10 bei der Shiraishi Omya GmbH, Aut-Gummern) zugegeben und eine Minute unter Rühren bei 600 U/min aufgeschlossen. Schließlich werden 2,0 g 3-Aminopropyl-trimethoxysilan, 1,0 g HALS-Stabilisator (käuflich erhältlich unter der Bezeichnung TINUVIN^{®} 123 bei der BASF SE, D-Ludwigshafen; CAS-NR: 129757-67-1) und 0,4 g Dibutylzinndilaurat 1 Minute bei 200 U/min eingemischt und 1 Minute bei 200 U/min im Teilvakuum (ca. 1 kPa (100 mbar)) homogenisiert und blasenfrei gerührt. Die so erhaltene Masse wird in 310 ml PE-Kartuschen abgefüllt und 24 Stunden bei 20°C vor der Untersuchung gelagert.

Die Bestimmung von Hautbildungszeit, mechanischen Eigenschaften und Rückstellung erfolgt wie in Beispiel 8 beschrieben. Die Ergebnisse finden sich in Tabelle 2.

**Tabelle 2:**

| **Formulierung aus Beispiel** | **9** |
|---|---|
| Polymer mit 2 Si(OCH₃)₃-Gruppen [Gew.-%] | 23 |
| Polymer mit 1 Si(CH₃) (OCH₃) 2-Gruppe [Gew.-%] | 6,5 |
| Hautbildungszeit [min] | 23 |
| Shorehärte A | 19 |
| Reißdehnung [%] | 381 |
| Reißfestigkeit [MPa] | 1,2 |
| 100%-Modul [MPa] | 0,32 |
| Rückstellung [%] | 72 |

### Beispiel 10

### Herstellung einer hochmoduligen Klebstoffformulierung und Bestimmung der mechanischen Eigenschaften.

20 g Polymer A aus Beispiel 1 werden in einem Laborplanetenmischer der Fa. PC-Laborsystem, ausgestattet mit zwei Balkenmischern, bei ca. 25°C mit 40,0 g eines beidseitig silanterminierten Polypropylenglycols mit einer mittleren Molmasse Mₙ von 18000 g/mol und Endgruppen der Formel -O-C(=O)-NH-(CH₂)₃-Si(OCH₃)₃ (käuflich erhältlich unter der Bezeichnung GENIOSIL^{®} STP-E35 bei der Wacker Chemie AG, D-München) und 3,0 g Vinyltrimethoxysilan 2 Minuten bei 200 U/min homogenisiert.

Danach werden 126,0 g einer gemahlenen natürlichen Kreide mit einem mittleren Teilchendurchmesser (D50%) von ca. 5 µm (käuflich erhältlich unter der Bezeichnung Ulmer Weiß XM bei der Eduard Merkle GmbH & Co. KG, D-Blaubeuren) und 8 g einer mit Fettsäure beschichteten gefällten Kreide mit einem mittleren Teilchendurchmesser (D50%) von ca. 0,07 µm (käuflich erhältlich unter der Bezeichnung Hakuenka CCR S10 bei der Shiraishi Omya GmbH, Aut-Gummern) zugegeben und eine Minute unter Rühren bei 600 U/min aufgeschlossen. Schließlich werden 2,0 g *N*-(2-Aminoethyl)-3-aminopropyl-trimethoxysilan und 1,0 g HALS-Stabilisator (käuflich erhältlich unter der Bezeichnung TINUVIN^{®} 123 bei der BASF SE, D-Ludwigshafen; CAS-NR: 129757-67-1) 1 Minute bei 200 U/min eingemischt und 1 Minute bei 200 U/min im Teilvakuum (ca. 1 kPa (100 mbar)) homogenisiert und blasenfrei gerührt.

Die so erhaltene Masse wird in 310 ml PE-Kartuschen abgefüllt und 24 Stunden bei 20°C vor der Untersuchung gelagert.

Die Bestimmung von Hautbildungszeit, mechanischen Eigenschaften und Rückstellung erfolgt wie in Beispiel 8 beschrieben. Die Ergebnisse finden sich in Tabelle 3.

**Tabelle 3:**

| **Klebstoffformulierung aus Beispiel** | **10** |
|---|---|
| Polymer mit 2 Si(OCH₃)₃-Gruppen [Gew.-%] | 20 |
| Polymer mit 1 Si(CH₃) (OCH₃)₂-Gruppe [Gew.-%] | 10 |
| Hautbildungszeit [min] | 134 |
| Shorehärte A | 67 |
| Reißdehnung [%] | 105 |
| Reißfestigkeit [MPa] | 2,7 |
| 100%-Modul [MPa] | 2,7 |

## Patentansprüche

1. Massen (M) enthaltend
(A) 100 Gewichtsteile silanvernetzende Polymere der Formel
(HO)ₓ-Y-[O-CO-NH-(CR¹₂)_{b}-SiRₐ(OR₂)₃₋ₐ]₂₋ₓ (I),
wobei
Y einen 2-wertigen Polymerrest bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt,
R² gleich oder verschieden sein kann und Wasserstoffatom oder einen einwertigen, gegebenenfalls substituierten Kohlenwasserstoffrest darstellt,
x 0 oder 1 ist,
a gleich oder verschieden sein kann und 0, 1 oder 2 ist und
b gleich oder verschieden sein kann und eine ganze Zahl von 1 bis 10 ist,
mit der Maßgabe, dass die Komponente (A) weniger als 15 Mol% Polymere der Formel (I) mit x=1 aufweist,
und
(B) 5 bis 500 Gewichtsteile silanvernetzende Polymere der Formel
R⁶-O-Z-[O-CO-NH-(CR⁴₂)_{d}-SiR³_{c}(OR⁵)_{3-c}]_{1-y}[OH]_{y} (II),
wobei
Z einen 2-wertigen Polymerrest, der über keine Hydroxylgruppe verfügt, bedeutet,
R³ gleich oder verschieden sein kann und einen einwertigen, gegebenenfalls substituierten Kohlenwasserstoffrest darstellt,
R⁴ gleich oder verschieden sein kann und Wasserstoffatom oder einen einwertigen, gegebenenfalls substituierten Kohlenwasserstoffrest darstellt,
R⁵ gleich oder verschieden sein kann und Wasserstoffatom oder einen einwertigen, gegebenenfalls substituierten Kohlenwasserstoffrest darstellt,
R⁶ einen einwertigen, gegebenenfalls substituierten Kohlenwasserstoffrest darstellt,
y gleich 0 oder 1 ist,
c gleich oder verschieden sein kann und 0, 1 oder 2 ist und
d gleich oder verschieden sein kann und eine ganze Zahl von 1 bis 10 ist,
mit der Maßgabe, dass Komponente (B) weniger als 15 Mol% Polymere der Formel (II) mit y=1 aufweist.

2. Massen gemäß Anspruch 1, **dadurch gekennzeichnet, dass** die Komponente (A) weniger als 5 Mol% Polymere der Formel (I) mit x=1 aufweist.

3. Massen gemäß Anspruch 1 oder 2, **dadurch gekennzeichnet, dass** die Komponente (B) weniger als 5 Mol% Polymere der Formel (II) mit y=1 aufweist.

4. Massen gemäß einem oder mehreren der Ansprüche 1 bis 3, **dadurch gekennzeichnet, dass** sie 10 bis 100 Gewichtsteile Polymer (B) enthalten.

5. Massen gemäß einem oder mehreren der Ansprüche 1 bis 4, **dadurch gekennzeichnet, dass** sie zusätzlich nicht direkt an Carbonylgruppen gebundene Stickstoffatome aufweisende Organosiliciumverbindungen (C) enthalten.

6. Massen gemäß Anspruch 5, **dadurch gekennzeichnet, dass** es sich bei den Organosiliciumverbindungen (C) um Verbindungen enthaltend Einheiten der Formel
DₑSi(OR⁷)_{f}R⁸_{g}O_{(4-e-f-g)/2} (III)
handelt, wobei
R⁷ gleich oder verschieden sein kann und Wasserstoffatom oder gegebenenfalls substituierte Kohlenwasserstoffreste bedeutet,
D gleich oder verschieden sein kann und einwertige, SiCgebundene, nicht direkt an Carbonylgruppen gebundene Stickstoffatome aufweisende Reste bedeutet,
R⁸ gleich oder verschieden sein kann und einen einwertigen, gegebenenfalls substituierten SiC-gebundenen, von Stickstoff freien organischen Rest bedeutet,
e 0, 1, 2, 3 oder 4 ist,
f 0, 1, 2 oder 3 ist und
g 0, 1, 2 oder 3 ist,
mit der Maßgabe, dass die Summe aus e+f+g kleiner oder gleich 4 ist und pro Molekül mindestens ein Rest D anwesend ist.

7. Massen gemäß einem oder mehreren der Ansprüche 1 bis 6, **dadurch gekennzeichnet, dass** sie
(A) 100 Gewichtsteile Polymere (A),
(B) 5 bis 500 Teile Polymere (B),
(C) 0,1 bis 10 Gewichtsteile nicht direkt an Carbonylgruppen gebundene Stickstoffatome aufweisende Organosiliciumverbindungen,
(D) 50 bis 500 Gewichtsteile Füllstoffe,
gegebenenfalls (E) Siliconharze,
gegebenenfalls (F) Katalysatoren,
gegebenenfalls (G) Haftvermittler,
gegebenenfalls (H) Wasserfänger,
(I) 0,01 bis 100 Gewichtsteile nicht reaktive Weichmacher,
gegebenenfalls (J) Additive und
gegebenenfalls (K) Zuschlagstoffe enthalten.

8. Verfahren zur Herstellung der Massen (M) gemäß einem oder mehreren der Ansprüche 1 bis 7 durch Mischen der einzelnen Komponenten in beliebiger Reihenfolge.

9. Formkörper hergestellt durch Vernetzung der Massen (M) gemäß einem oder mehreren der Ansprüche 1 bis 7 oder hergestellt gemäß Anspruch 8.

10. Verfahren zur Verklebung von Substraten, bei dem die Masse (M) gemäß einem oder mehreren der Ansprüche 1 bis 7 oder hergestellt gemäß Anspruch 8 auf die Oberfläche mindestens eines Substrates aufgebracht, diese Oberfläche dann mit dem zu verklebenden zweiten Substrat in Kontakt gebracht und anschließend vernetzen gelassen wird.

11. Verfahren zur Herstellung von Materialverbunden, bei dem die Masse gemäß einem oder mehreren der Ansprüche 1 bis 7 oder hergestellt gemäß Anspruch 8 auf mindestens ein Substrat aufgebracht und anschließend vernetzen gelassen wird.

## Claims

1. Compositions (M) comprising
(A) 100 parts by weight of silane-crosslinking polymers of the formula
(HO)ₓ-Y-[O-CO-NH-(CR¹₂)_{b}-SiRₐ(OR²)₃₋ₐ]₂₋ₓ (I)
where
Y is a divalent polymer radical,
R may be the same or different and is a monovalent, optionally substituted hydrocarbyl radical,
R¹ may be the same or different and is a hydrogen atom or a monovalent, optionally substituted hydrocarbyl radical,
R² may be the same or different and is a hydrogen atom or a monovalent, optionally substituted hydrocarbyl radical,
x is 0 or 1,
a may be the same or different and is 0, 1 or 2 and
b may be the same or different and is an integer from 1 to 10,
with the proviso that component (A) includes less than 15 mol% of polymers of the formula (I) with x = 1,
and
(B) 5 to 500 parts by weight of silane-crosslinking polymers of the formula
R⁶-Q-Z-[O-CO-NH-(CR⁴₂)_{d}-SiR³_{c}(OR⁵)_{3-c}]_{1-y}[OH]_{y} (II)
where
Z is a divalent polymer radical having no hydroxyl group,
R³ may be the same or different and is a monovalent, optionally substituted hydrocarbyl radical,
R⁴ may be the same or different and is a hydrogen atom or a monovalent, optionally substituted hydrocarbyl radical,
R⁵ may be the same or different and is a hydrogen atom or a monovalent, optionally substituted hydrocarbyl radical,
R⁶ is a monovalent, optionally substituted hydrocarbyl radical,
y is 0 or 1,
c may be the same or different and is 0, 1 or 2 and
d may be the same or different and is an integer from 1 to 10,
with the proviso that component (B) includes less than 15 mol% of polymers of the formula (II) with y = 1,

2. Compositions according to Claim 1, **characterized in that** component (A) includes less than 5 mol% of polymers of the formula (I) with x = 1.

3. Compositions according to Claim 1 or 2, **characterized in that** component (B) includes less than 5 mol% of polymers of the formula (II) with y = 1.

4. Compositions according to any of Claims 1 to 3, **characterized in that** they contain 10 to 100 parts by weight of polymer (B).

5. Compositions according to any of Claims 1 to 4, **characterized in that** they additionally contain organosilicon compounds (C) having nitrogen atoms not bonded directly to carbonyl groups.

6. Compositions according to Claim 5, **characterized in that** the organosilicon compounds (C) are compounds containing units of the formula
DₑSi(OR⁷)_{f}R⁸_{g}O_{(4-e-f-g)/2} (III)
where
R⁷ may be the same or different and is a hydrogen atom or optionally substituted hydrocarbyl radicals,
D may be the same or different and is monovalent, SiC-bonded radicals having nitrogen atoms not bonded directly to carbonyl groups,
R⁸ may be the same or different and is a monovalent, optionally substituted, SiC-bonded, nitrogen-free organic radical,
e is 0, 1, 2, 3 or 4,
f is 0, 1, 2 or 3 and
g is 0, 1, 2 or 3,
with the proviso that the sum total of e + f + g is less than or equal to 4 and at least one D radical is present per molecule.

7. Compositions according to any of Claims 1 to 6, **characterized in that** they contain
(A) 100 parts by weight of polymers (A),
(B) 5 to 500 parts of polymers (B),
(C) 0.1 to 10 parts by weight of organosilicon compounds having nitrogen atoms not bonded directly to carbonyl groups,
(D) 50 to 500 parts by weight of fillers,
optionally (E) silicone resins,
optionally (F) catalysts,
optionally (G) adhesion promoters,
optionally (H) water scavengers,
(I) 0.01 to 100 parts by weight of unreactive plasticizers,
optionally (J) additives and
optionally (K) admixtures.

8. Process for producing the compositions (M) according to one or more of Claims 1 to 7 by mixing the individual components in any sequence.

9. Shaped body produced by crosslinking the compositions (M) according to one or more of Claims 1 to 7 or produced according to Claim 8.

10. Method of bonding substrates, in which the composition (M) according to one or more of Claims 1 to 7 or produced according to Claim 8 is applied to the surface of at least one substrate, then this surface is contacted with the second substrate to be bonded and then left to crosslink.

11. Method of producing material composites, in which the composition according to one or more of Claims 1 to 7 or produced according to Claim 8 is applied to at least one substrate and then left to crosslink.

## Revendications

1. Matières (M), contenant :
(A) 100 parties en poids de polymères à réticulation silane de formule
(HO)x-Y-[O-CO-NH-(CR¹₂)_{b}-SiRₐ(OR₂)₃₋ₐ]₂₋ₓ (I)
dans laquelle
Y signifie un radical polymère bivalent,
les R peuvent être identiques ou différents, et représentent un radical hydrocarboné monovalent, éventuellement substitué,
les R¹ peuvent être identiques ou différents, et représentent un atome d'hydrogène ou un radical hydrocarboné monovalent, éventuellement substitué,
les R² peuvent être identiques ou différents, et représentent un atome d'hydrogène ou un radical hydrocarboné monovalent, éventuellement substitué,
x représente 0 ou 1,
les a peuvent être identiques ou différents, et représentent 0, 1 ou 2, et
les b peuvent être identiques ou différents, et représentent un nombre entier de 1 à 10,
à condition que le composant (A) comprenne moins de 15 % en moles de polymères de formule (I) avec x = 1,
et
(B) 5 à 500 parties en poids de polymères à réticulation silane de formule
R⁶-O-Z-[O-CO-NH-(CR⁴₂)_{d}-SiR³_{c}(OR⁵)_{3-c}]_{1-y}[OH]_{y} (II)
dans laquelle
Z signifie un radical polymère bivalent, qui ne comprend pas de groupe hydroxyle,
les R³ peuvent être identiques ou différents, et représentent un radical hydrocarboné monovalent, éventuellement substitué,
les R⁴ peuvent être identiques ou différents, et représentent un atome d'hydrogène ou un radical hydrocarboné monovalent, éventuellement substitué,
les R⁵ peuvent être identiques ou différents, et représentent un atome d'hydrogène ou un radical hydrocarboné monovalent, éventuellement substitué,
R⁶ représente un radical hydrocarboné monovalent, éventuellement substitué,
y représente 0 ou 1,
les c peuvent être identiques ou différents, et représentent 0, 1 ou 2,
et
les d peuvent être identiques ou différents, et représentent un nombre entier de 1 à 10,
à condition que le composant (B) comprenne moins de 15 % en moles de polymères de formule (II) avec y = 1.

2. Matières selon la revendication 1, **caractérisées en ce que** le composant (A) comprend moins de 5 % en moles de polymères de formule (I) avec x = 1.

3. Matières selon la revendication 1 ou 2, **caractérisées en ce que** le composant (B) comprend moins de 5 % en moles de polymères de formule (II) avec y = 1.

4. Matières selon une ou plusieurs des revendications 1 à 3, **caractérisées en ce qu'**elles contiennent 10 à 100 parties en poids de polymère (B).

5. Matières selon une ou plusieurs des revendications 1 à 4, **caractérisées en ce qu'**elles contiennent en outre des composés d'organosilicium (C) comprenant des atomes d'azote non reliés directement à des groupes carbonyle.

6. Matières selon la revendication 5, **caractérisées en ce que** les composés d'organosilicium (C) sont des composés contenant des unités de formule
DₑSi(OR⁷)_{f}R⁸_{g}O_{(4-e-f-g)/2} (III)
dans laquelle
les R⁷ peuvent être identiques ou différents, et signifient un atome d'hydrogène ou des radicaux hydrocarbonés éventuellement substitués,
les D peuvent être identiques ou différents, et signifient des radicaux monovalents, reliés à SiC, comprenant des atomes d'azote non reliés directement à des groupes carbonyle,
les R⁸ peuvent être identiques ou différents, et signifient un radical organique monovalent, relié à SiC, éventuellement substitué, exempt d'azote,
e représente 0, 1, 2, 3 ou 4,
f représente 0, 1, 2 ou 3 et
g représente 0, 1, 2 ou 3,
à condition que la somme de e+f+g soit inférieure ou égale à 4 et qu'au moins un radical D soit présent par molécule.

7. Matières selon une ou plusieurs des revendications 1 à 6, **caractérisées en ce qu'**elles contiennent
(A) 100 parties en poids de polymères (A),
(B) 5 à 500 parties de polymères (B),
(C) 0,1 à 10 parties en poids de composés d'organosilicium comprenant des atomes d'azote non reliés directement à des groupes carbonyle,
(D) 50 à 500 parties en poids de charges,
éventuellement (E) des résines de silicone,
éventuellement (F) des catalyseurs,
éventuellement (G) des promoteurs d'adhésion,
éventuellement (H) des capteurs d'eau,
(I) 0,01 à 100 parties en poids de plastifiants non réactifs,
éventuellement (J) des additifs et
éventuellement (K) des adjuvants.

8. Procédé de fabrication des matières (M) selon une ou plusieurs des revendications 1 à 7 par mélange des composants individuels dans un ordre quelconque.

9. Corps moulé fabriqué par réticulation des matières (M) selon une ou plusieurs des revendications 1 à 7 ou fabriquées selon la revendication 8.

10. Procédé de collage de substrats, selon lequel la matière (M) selon une ou plusieurs des revendications 1 à 7 ou fabriquée selon la revendication 8 est appliquée sur la surface d'au moins un substrat, puis cette surface est mise en contact avec le deuxième substrat à coller, puis laissée réticuler.

11. Procédé de fabrication de matériaux composites, selon lequel la matière (M) selon une ou plusieurs des revendications 1 à 7 ou fabriquée selon la revendication 8 est appliquée sur au moins un substrat, puis laissée réticuler.
